(19) **Europäisches Patentamt**
**European Patent Office**
**Office européen des brevets**

(11) **EP 4 258 043 B1**

(12) **EUROPEAN PATENT SPECIFICATION**

(45) Date of publication and mention
of the grant of the patent:
**21.01.2026 Bulletin 2026/04**

(51) International Patent Classification (IPC):
***G02C 7/10*** *(2006.01)*

(52) Cooperative Patent Classification (CPC):
**G02C 7/10**

(21) Application number: **22315078.0**

(22) Date of filing: **05.04.2022**

(54) **METHOD FOR SELECTING A LENS HAVING A SPECIAL LIGHT TRANSMISSION FILTER**

VERFAHREN ZUR AUSWAHL EINER LINSE, DIE EINEN SPEZIELLEN LICHTÜBERTRAGUNGSFILTER AUFWEIST

PROCÉDÉ DE SÉLECTION D'UNE LENTILLE DOTÉE D'UN FILTRE DE TRANSMISSION DE LUMIÈRE SPÉCIAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.10.2023 Bulletin 2023/41**

(73) Proprietor: **Essilor International**
**94220 Charenton-Le-Pont (FR)**

(72) Inventors:
• **Dubail, Marie**
**94410 Saint-Maurice (FR)**
• **Raza, Aiman**
**69007 Lyon (FR)**
• **Ponot, Solange**
**69004 Lyon (FR)**
• **Dumortier, Dominique**
**69200 Vénissieux (FR)**
• **Jost, Sophie**
**69330 MEYZIEU (FR)**

(74) Representative: **Jacobacci Coralis Harle**
**32, rue de l'Arcade**
**75008 Paris (FR)**

(56) References cited:
**EP-A1- 3 495 875    EP-A1- 3 753 475
WO-A1-2019/002416    WO-A1-2020/242569
US-B1- 9 905 022**

**Description**

TECHNICAL FIELD OF THE INVENTION

The present invention generally relates to the field of eyeglasses.

It more particularly relates to a method for selecting a lens amongst predetermined lenses having distinct light transmission filters, depending on an environment in which said lens is to be used.

BACKGROUND INFORMATION AND PRIOR ART

When a customer wants to buy sunglasses, the tint of the lenses is generally already defined. This is why most sunglasses are chosen according to the frame aesthetic rather than the solar filter applied. Consequently, most sold sun lenses are grey, brown and grey-green.

Document WO2019002416 proposes a solution to choose a lens according to the needs of the wearer instead of according to appearance.

To select the best color for the sun lenses (that is to say the best filter), this document suggests taking the usual environment of the wearer into consideration (usual location, usual activity...).

Thanks to this solution, because every wearer practices specific activities in typical environments, it is possible to select lenses that positively impact the color vision of the wearers.

In order to offer the best sun lenses to the wearer, knowledge about their habits and preferences are required in their daily life, regarding his specific activities and location.

The main difficulty then consists in defining the best parameters for selecting sun lenses that perfectly suit wearers' color vision needs related to each environment.

SUMMARY OF THE INVENTION

In this context, the aim of the invention is to prescribe the most adapted and personalized filter, according to personal criteria or habits, and more generally to the environment(s) where the lens will be worn.

To this end, the present invention provides a method implemented by a processing unit that comprises a CPU, a memory and various input and output interfaces, for selecting a light transmission filter for a lens amongst predetermined light transmission filters, depending on an environment in which said lens is to be used, comprising steps of:

- providing at least one image of said environment,
- identifying a predetermined number of main colors on said at least one image,
- estimating a first value of at least one color component for each main color,

- determining, for each main color, a modified color corresponding to said main color seen through a lens having a first of said predetermined light transmission filters,
- calculating a second value of said at least one color component for each modified color,
- repeating the determining and calculating steps for each of the other predetermined light transmission filters,
- comparing, for each main color and each predetermined light transmission filter, said first value to each second value, and
- deducing therefrom a selected light transmission filter.

In other words, the invention consists in:

- simplifying the complex color content of a typical outdoor or indoor environment (the one chosen by the wearer), for instance by selecting the six dominant colors of a scene of this environment,
- calculating how these dominant colors are modified when the scene is observed through different sun lenses, and
- deducing the ideal sun lens according to the differences between these dominant colors and the corresponding modified colors.

The selected lens is for instance the one that modify the least the hue and/or the more the chroma of the image.

In a variant, it may be the one that protects the eye the better if the lens is to be used in a shiny environment (snow, sea...).

Thanks to the invention, the lens prescription can recommend either a steady filter for a given environment (landscape, activity...), or a changing filter that can change according to the environment, for example by means of an active filter taking into account regular updates of surrounding colors.

Other preferred features of the invention are the following ones:

- the providing step comprises the acquisition of distinct images of said environment, and during the identifying step, the main colors are identified on said distinct images.
- before the identifying step, said distinct images are associated into a single final image, and during the identifying step, the main colors are identified on said final image.

- during the identifying step, intermediate main colors are identified on each distinct image, and the main colors are selected among said intermediate main colors according to the proportion of each intermediate main color on said distinct images.
- the predetermined number is greater than two and is preferably equal to six.

- said step of identifying comprises dividing said image in a predetermined number of groups of areas, each group of areas being defined by a main color that is representative of the colors of said areas.
- during said step of identifying, said provided image is divided in groups of areas by using a K-mean process or a process derived from said K-mean process.
- the provided image is blurred, for instance by means of a low pass Gaussian filter, and said process is performed on the blurred image.
- the step of identifying comprises assigning to each group of areas a main color selected into a list of colors, and if two of said groups of areas are assigned to the same main color, said groups of areas are merged.
- said color component is determined according to the CIELAB color space or to a color space deriving from said CIELAB color space.
- said color component is a color hue.
- during the comparison step, a first difference between the hue of the main color and the hue of the corresponding modified color is determined for each main color and for each predetermined light transmission filter, and during the deducing step, the light transmission filter is selected according to said first differences.
- said color component is a color chroma.
- during the comparison step, a second difference between the chroma of the main color and the chroma of the corresponding modified color is determined for each main color and for each predetermined light transmission filter, and during the deducing step, the light transmission filter is selected according to said second differences .
- the lens is selected in two sub-steps of choosing, amongst all the predetermined light transmission filters, the one or those for which all the first differences are fewer than a predetermined threshold, and selecting, among the chosen predetermined light transmission filters, at least one for which the second differences are greater than a predetermined threshold, and are preferably the greatest.
- the at least one provided image is provided by a future wearer of the lens.
- the at least one provided image is read in a database storing images that are each associated to a given environment.
- many images of many distinct environments are provided and a light transmission filter is selected for each environment.
- said acquired image being of the RGB kind, during said determining step, said modified colors are determined by applying a spectral transmission of the predetermined light transmission filter on each main color, thanks to a color book of spectral reflectance.
- said acquired image being of the hyperspectral kind, during said determining step, said modified colors are determined by applying a spectral transmission of the predetermined light transmission filter on each pixel of the acquired image to obtain a filtered image and by performing said identifying step on the filtered image.

DETAILED DESCRIPTION OF EXAMPLE(S)

The following description with reference to the accompanying drawings, given by way of non-limiting example makes it clear what the invention consists in and how it can be reduced to practice.

In the accompanying drawings:

- Figure 1 is a flowchart illustrating the different steps of a process according to the invention,
- Figure 2A is a first example of an original image and of blurred images used for implementing the process of Figure 1,
- Figure 2B is a second example of an original image and of blurred images used for implementing the process of Figure 1,
- Figure 3 shows another original image, areas of this original image when divided and the main colors of these areas,
- Figure 4 is a graphic illustrating differences of hues applied by two distinct lenses (or groups of lenses) on main colors,
- Figure 5 is a graphic illustrating differences of chroma applied by the two distinct lenses (or groups of lenses) on the main colors, and
- Figure 6 represents a color system.

The invention generally relates to eye protection lenses suitable to protect individual eyes from light. Here, it more particularly applies to sun lenses but in a variant, it could also apply to lenses that are usually used in indoor environments (lens with blue filter, lens having contrast-enhancing filter...).

Such a lens comprises a light transmission filter that has to be selected based on an individual's preference.

To this end, the process according to the invention proposes a method enabling to select a lens having the filter that suits the best with the individual's usual environment(s).

We can thus consider, by way of example, that an individual (also called future wearer of the sun lenses) wants to buy sunglasses and that a salesperson tries to find the most suitable sun lens.

To this end, different methods can be considered.

In the following, we will consider the example according to which the salesperson has a catalog in which different sun lenses are associated to given environments (activity, landscape), so that the individual can for instance selects his sun lenses according to the activity he is used to practice. In this case the association between lens filters and environments is made upstream, using the process described below.

But alternatively, it could also be possible to provide the individual with a made-to-measure lens, the filter of which would be selected among several filters, by using the method described below.

This method is performed by means of a processing unit that comprises a CPU, a memory and various input and output interfaces.

Thanks to its input interfaces, the processing unit is suitable for receiving images. Thanks to its output interfaces, the processing unit is suitable for assigning a lens to each environment.

Thanks to its memory, the processing unit stores a computer application, consisting of computer programs comprising instructions, the execution of which by the processor enables the processing unit to implement the process described below.

The process of assigning a lens (that is to say a light transmission filter) to a given environment can now be described in detail.

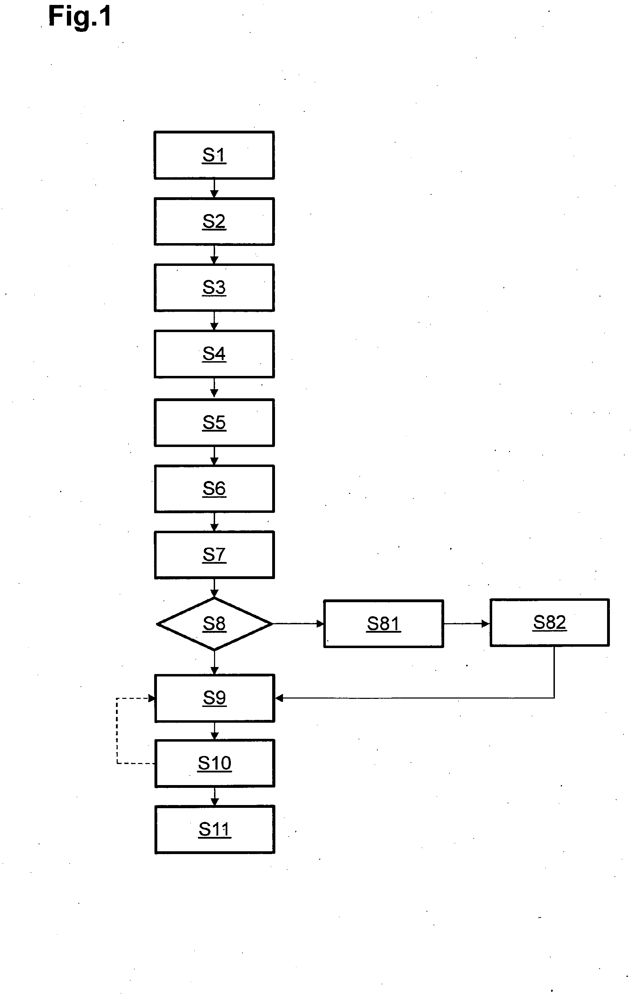

This process is performed in many successive steps, that are illustrated in Figure 1.

The first step S1 of the process consists in providing at least one image of a particular environment.

This image is preferably characteristic of the environment in which the sun lens will be worn.

The concept of "environment" can be defined as a type of typical context (landscape, habitual view...).

The environment can correspond to a given geographical location or to a given object or series of similar objects located in different places or looked through different angles.

In a given environment, we usually find the same objects (trees, mountains, buildings...) and/or a similar average luminance (even if the colorimetry may differ).

For example, the countryside (nature), the forest, the mountain, the city (urban), the road, the snow, the water form distinct environments.

But in a more general manner, the environment may be defined as a context that depends on landscapes data or on personal criteria.

By way of example, an environment can be associated with a particular activity (golf, car driving, tennis, skiing, etc.) or a particular habit (a usual path of a bus driver...).

An environment can be defined by images and characterized by a set of colors.

At this stage, the idea is therefore to acquire at least one typical image of an environment.

Preferably, a series of several images typical of this environment are acquired.

Different embodiments can be contemplated to perform this first step S1.

In a first embodiment, the images are provided by the customer who has taken photos of the environment in which he will use his future sunglasses.

In a second embodiment, the images of a given environment are provided by the processing unit owner, who has registered images typical of distinct environments in the memory of the processing unit.

In a third embodiment, the images are automatically read in a database that is connected to the processing unit, for instance by the Internet, and that stores images each associated to a given environment by metadata or tags.

In a fourth embodiment, the images are read in a database that is connected to the processing unit, for instance by the Internet, and are manually chosen according to the environment selected by the individual.

The first step S1 could also be performed by combining some of these embodiments.

In every embodiment, the acquired images can be of the hyperspectral type or of the RGB type (ideally without any post-processing).

If the image is of the hyperspectral type, this image is first converted in RGB through a color appearance model (for instance the one named iCAM06).

This model is for instance described into "Kuang, J., Johnson, G. M., & Fairchild, M. (2007). iCAM06: A refined image appearance model for HDR image rendering. Journal of Visual Communication and Image Representation, 18(5). https://doi.org/10.1016/j.jvcir.2007.06.003".

When the image(s) is/are acquired, the processing unit determines the main colors of the image(s), here the dominant colors of these images.

The notion of dominant colors can be defined as the colors that are the most present in the image(s).

In order to identify a predetermined number of main colors on the image(s), the processing unit divides said image(s) in a predetermined number of groups of areas (also called "clusters") in each of which one of said main colors is representative of the colors of the areas of the cluster.

We can first describe in detail how this operation is performed when only one single image of the environment has been acquired.

The second step S2 of the process consists in undoing any gamma correction on the acquired image.

Such a gamma correction is generally applied on pictures to be faithfully displayed on a screen. Here, this correction is removed so as to obtain a raw image.

In a following step S3, the RGB raw image is transformed into a new image coded in a determined color space. Thanks to this step, the color of each pixel of the image can be transformed into a color space that enables an easier processing of the colors.

The idea is to characterize the colors of the images by parameters easy to find (called hereinafter "components").

Here, the CIELAB color space is chosen over other color spaces not only because of simple, homogeneous, and uniform color distribution but also because of the perceived effectiveness of CIELAB color differences.

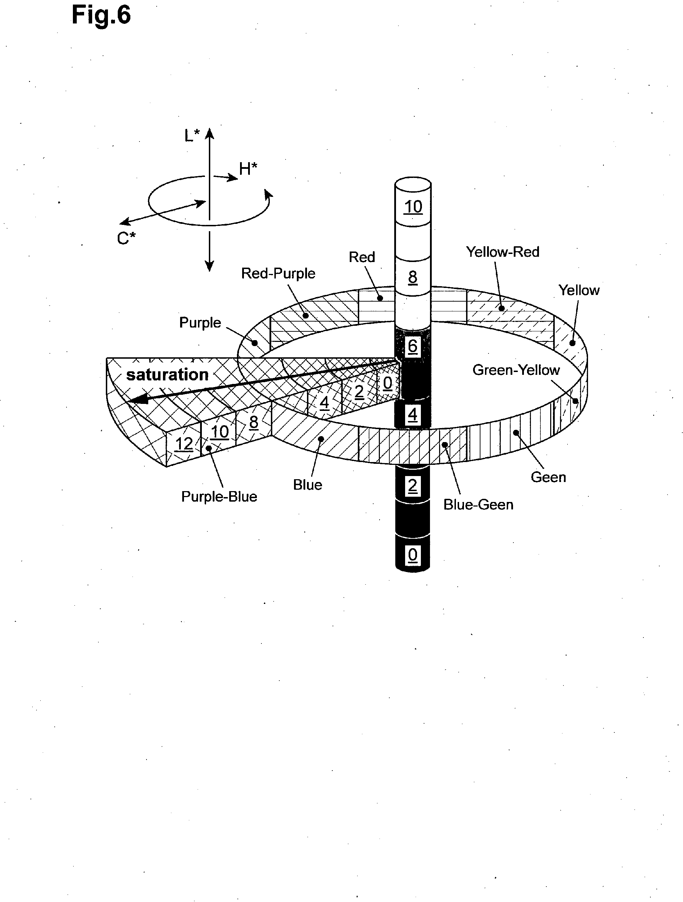

As shown in the upper left corner of Figure 6, in this color system, a color can be defined by three components: a clarity or lightness referenced L* (0 for black and 10 for white) and two coordinates referenced (a*, b*) or (H*, C*).

The two components a*, b* characterize the color of each pixel and are expressed in Cartesian coordinates. The components H*, C* correspond to these components a*, b*, expressed in polar coordinates. They are named hue H* and chroma C* (that relates to the pep of the color, and more precisely to its saturation or contrast or vibrance or vividness, and that lies between a 0 for a low saturation and 12 for a high saturation).

In this CIELAB system, the differences of value $\Delta L^*$, hue $\Delta H^*$ and chroma $\Delta C^*$ are standardized and easy to interpret.

But the CIELAB color space requires the knowledge of the white point of an illuminant, which can create a problem for images with unknown illuminants.

Consequently, in a third step S3, the processing unit first estimates this illuminant.

To this end, various illuminant estimation methods exist.

The White Patch Retinex algorithm and Gray world algorithm (Buchsbaum, 1980; Land, 1977) are the commonly used algorithm though they are prone to large estimation errors (Hordley 2006). Another method that exists identifies the bright and dark pixels of the image as per their distance from the average color of the scene. It then performs Principal Component Analysis (PCA) on the bright and dark pixels. The first component of the PCA is thus the estimated illuminant. This method is described in "Cheng, D., Prasad, D. K., & Brown, M. S. (2014). Illuminant estimation for color constancy: Why spatial-domain methods work and the role of the color distribution. Journal of the Optical Society of America A, 31(5), 1049. https:/Idoi.org/10.1364/JOSAA.31.001049".

Another method is described in "Hordley, S. D. (2006). Scene illuminant estimation: Past, present, and future. Color Research & Application, 31(4), 303-314. https://doi.org/10.1002/col.20226".

Then, in a fourth step S4, thanks to the illuminant white-point, the linear image is converted into a LAB image (that is to say into an image characterized by the three components L*, a*, b* or L*, H*, C*).

Then, during a fifth step S5, this LAB image is filtered in order to obtain a blurred image easier to process. The blurring intensity is adjusted to give less importance to the edges and local differences in the images while preserving the general distribution of colors in this image.

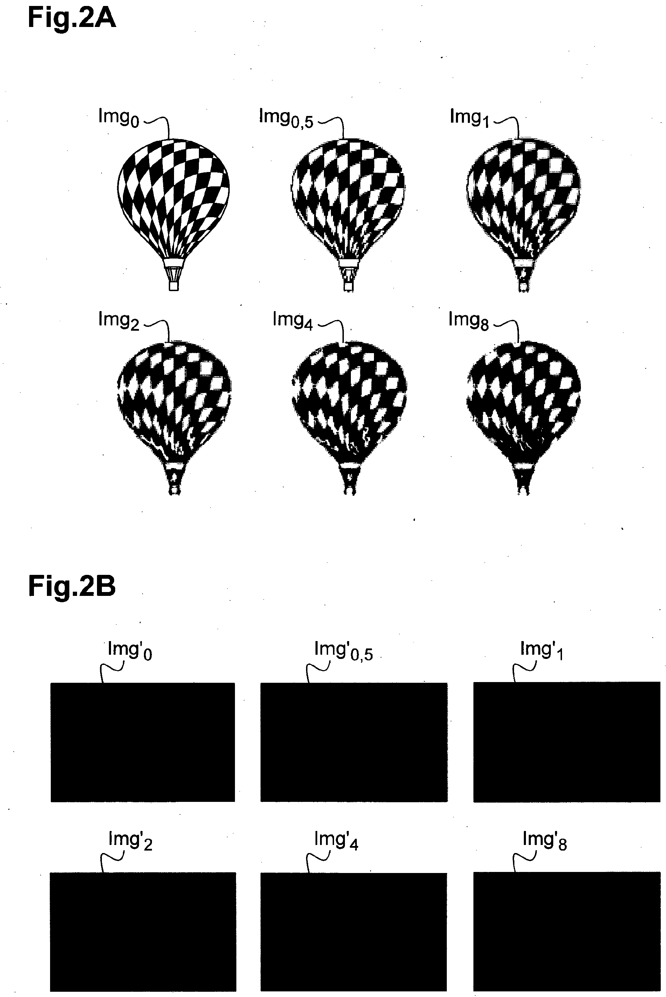

Here, as shown in Figures 2A and 2B, to visually interpret the impact of blurring, a Discrete Fourier transform is applied on two images $Img_0$, $Img'_0$ while progressively increasing the blurring intensity. These figures 2A and 2B show the effective reduction in the high frequency components of the images $Img_0$, $Img'_0$ as the filter blurring intensity increases.

The chosen filter is a low pass Gaussian filter, the blurring intensity of which being noted $\sigma$.

In Figures 2A and 2B, the images $Img_{0.5}$, $Img'_{0.5}$ correspond to the images blurred with a blurring intensity $\sigma$ of 0.5, the image $Img_1$, $Img'_1$ correspond to the images blurred with a blurring intensity $\sigma$ of 1...

Here, the blurring intensity $\sigma$ is chosen equal to 8 (which corresponds to the right image of Figures 2A and 2B).

The Gaussian blur is achieved by convolving the image with a Gaussian bell-shaped kernel as described in Mordinstov & K, 2013. In this document, the blurring intensity $\sigma$ corresponds to the standard deviation of the distribution. It controls the variance around a mean value of the Gaussian distribution.

This fifth step is essential to accelerate the convergence of the algorithm used to find the main colors of the image. Indeed, blurring with a relatively high blurring intensity $\sigma$ gives less importance to local differences and brings out the global color tendency of the image.

The blurred LAB image is then ready for a clustering process which aims at dividing the image in a predetermined number of groups of areas (the clusters) in each of which a main color dominates.

The idea of this process consists indeed in distributing the colors present in the image into various clusters of similar colors and retrieve the dominant colors of the scene.

To this end, during a sixth step S6, the processing unit uses a K-means algorithm or an algorithm deriving from it.

Here a K-means++ algorithm is used for segmenting the image in a predetermined number of clusters (as described in Arthur & Vassilvitskii, 2007).

This predetermined number is at least equal to two. It is preferably greater than three and it is here equal to six.

In other words, the algorithm consists in dividing the images in distinct areas each associating to one of these six colors.

This algorithm will not be described in detail here, but we can provide the following explanations.

The K-means algorithm locates randomly six initial seeds and works in loops to try to divide the images in clusters.

The K-means algorithm determines all the seeds randomly. This leads to the initialization of far-away centroids leading to poor and lengthy clustering.

Here, the K-means++ algorithm determines the first seed by random assignment, but the rest of the seeds are carefully determined to maximize the distance between the centroids. This approach takes longer in initializing, but the clustering process has been proved to be faster than the original K-means clustering, thus globally reducing the time taken to converge.

This algorithm is described in "Aubaidan. (2014). Comparative study of k-means and k-means++ clustering algorithms on crime domain. Journal of Computer Science, 10(7), 1197-1206. https://doi.org/10.3844/jcssp.2014.1197.1206"

This algorithm results on the determination of six clusters. Each cluster corresponds to a group of areas where a main color dominates.

Consequently, the resulting six clusters enable to identify the spatial location of the untouched color clusters and for instance to calculate the distribution of each cluster (in percentage of pixels).

Knowing the distribution of each cluster on the blurred image, a median sRGB triplet corresponding to the main color of a cluster is calculated for each cluster, on the RGB image (or on a sRGB image that is an image coded in standard RGB). Then, this sRGB triplet is converted into another triplet formed by the three components L*, a*, b* or L*, H*, C*.

During a seventh step S7, the processing unit can identify six "close main colors", that is to say six colors that are very next from the six main colors and that are well defined in a dictionary (or "palette") registering a finite number of colors.

To this end, the processing unit compares each found main color with predefined colors registered in the dictionary. Then, each found main color is approximated by the predefined color that comes closest to it (named "standard main color").

More specifically, the triplet of each found main color is compared with standard data of a color system. Here, the color system is the Munsell color system, as shown in Figure 6. This system is chosen because it fits perfectly with the CIELAB color space.

More precisely, the triplet is compared with the ISCC-NBS color dictionary in order to try to find, for each found main color, the closest color triplet (and its name) as defined through the CIEDE2000 formula (Cobeldick, 2019; Judd & Kelly, 1939; Sharma et al., 2005).

We can note here that this dictionary uses 13 basic color names for the first level, and that 29 intermediate color categories form a finer second level while 20 adjectives like vivid, dull, bright, moderate etc. form the finest third level. Finally, the final dictionary contains 267 distinct color names.

At this stage, the names of the six standard main colors of the image are identified.

Then, during an eighth step S8, the processing unit checks whether two clusters or more are associated to the same color. A redundancy can indeed appear if two distinct found main colors are approximated by the same standard color.

If any, the two clusters are merged to form a new cluster (step S81).

Then, during a step S82, the proportion in percentage of the color distribution is updated.

If no redundancy is detected, the process continues with the next step S9.

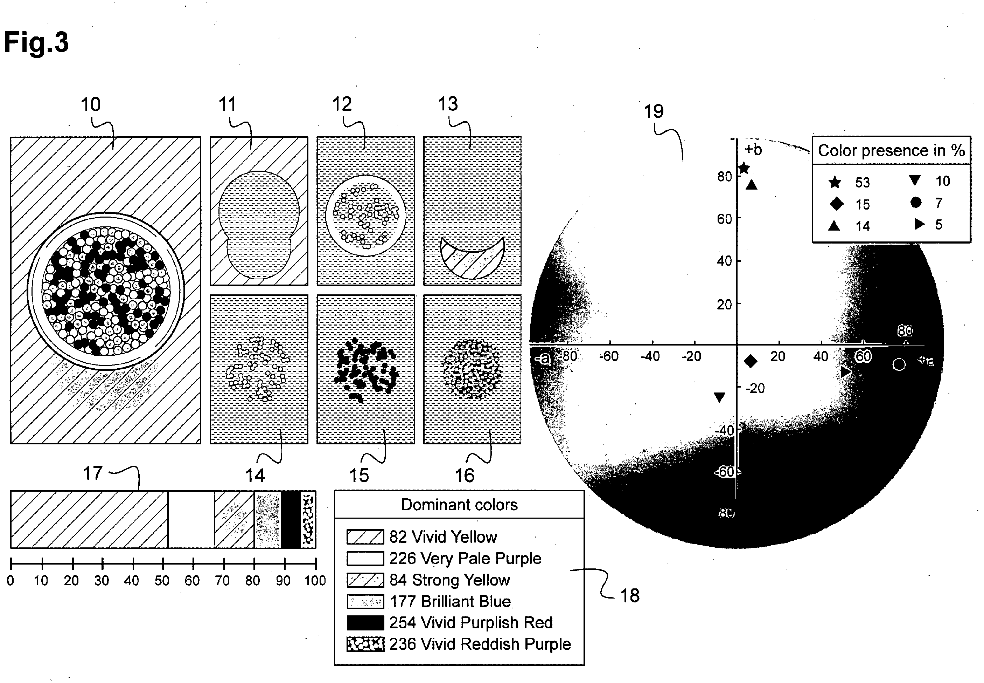

Before describing this step S9, we can refer to Figure 3.

Figure 3 shows an example of acquired RGB image 10. This image does not represent an environment but is shown to clearly illustrate the clustering operation.

On the right of this image 10 are shown the six clusters 11 - 16 obtained by means of the above process. It appears that each cluster corresponds to a group of areas having similar colors.

Under this image 10 is represented a bar 17 illustrating the percentage of distribution of each main color. On the right side, a box 18 gives the name of the six standard main color. Finally, a color circle 19 illustrates the coordinates, in the a*, b* system, of these standard main colors.

At this point, we can note that several images were submitted to a panel of persons, and these persons were asked to try to retrieve the six main colors of each image. The results of this experiment proved that the above algorithm finds the standard main colors of each image very accurately, compared to the perception of these persons. See for instance "Aiman Raza, Sophie Jost, Marie Dubail and Dominique Dumortier (2021). Automatic colour segmentation and colour palette identification of complex images, Journal of the International Colour Association (2021): 26, 11-21".

The above algorithm was described with a single image of the considered environment.

But in the preferred embodiment according to which several distinct images typical of a given environment have been acquired, the process is performed slightly differently.

The six standard main colors are indeed identified as a function of all the images of the environment.

In this embodiment, the acquired images can be associated into a single big image (not by superimposing the images but by aggregating them). They can be associated side to side, or the one above the other or in a matrix shape. Then, the steps S2 to S8 can be performed on this big image.

In a variant, the steps S2 to S8 can be performed for each image, in order to find for each image six clusters associated to six "intermediate standard main colors".

Then, the final six standard main colors are calculated according to the proportion of each intermediate standard main color on said distinct images. For instance, these final six standard main colors may be the ones that are the most represented on the images.

Here, we can note that an analysis made on a single image and an analysis made on a plurality of images produce different dominant colors. To be fully representative of an environment and not focus on specific objects, it is preferable to process a plurality of images, each of them representing a part of a global environment. Besides, specific objects or elements, such as skin tone or the principal object of an activity may be added as an additional image or a directly dominant color.

At this stage, the hue and chroma of each main standard color are known.

Then, during a ninth step S9, the processing unit determines the effect of at least two distinct filters (that is to say, in our example, of at least two distinct sun lenses) on the image(s) and/or on the standard main colors.

The sun lenses are distinct in the sense that their filters have distinct effects on the hue and/or the chroma of at least a color when seen through the lens.

A lens filter can for instance be defined by a variation of transmittance as a function of the wavelength.

To well understand the method, we can first consider a first sun lens.

To determine the effect of this sun lens, the process unit can calculate either the effect of the sun lens on the main standard colors in order to find six "modified colors", or the effect of the sun lens on the raw RGB image (in which case steps S2 to S8 are repeated on this image filtered by the sun lens so as to find the six "modified colors").

We can detail these calculations using two examples.

In a first example, each acquired image is of the hyperspectral kind. In other words, each pixel is associated with a variation of radiance as a function of the wavelength.

To determine the effect of the sun lens on the image(s), a spectral transmission of the sun lens is applied on each pixel to obtain a filtered image.

In other words, for each pixel, its variation of radiance is combined with the variation of transmittance of the sun lens in order to obtain a filtered hyperspectral image.

Then the filtered image is converted in RGB through the color appearance model iCAM06. After, steps S2 to S8 can be performed again on this RGB image in order to find the six modified colors.

In a second example, the acquired image is of the RGB kind.

To find the six modified colors, the processing unit applies the spectral transmission of the sun lens on each of the six standard main colors (not on the original image). The spectral reflectance of the dominant colors are retrieved from a color book, for instance the Munsell Color Book. The transmission of the lens is then applied and the resulting color is calculated.

This transformation is for instance performed by using a standard XYZ to CIE-L*a*b* matrices or through CIECAM02 process (as disclosed in "CIE 159. (2004). A colour appearance model for colour management systems: CIECAMO2. CIE Central Bureau").

We can briefly explain how this transformation is performed.

Considering the triplet (R, G, B) of a main standard color, we can calculate the triplet ($R_c$ $G_c$ $B_c$) of the modified color by using the following calculations:

$$\begin{pmatrix} R_c \\ G_c \\ B_c \end{pmatrix} = \left[ D \cdot \begin{pmatrix} \alpha & 0 & 0 \\ 0 & \beta & 0 \\ 0 & 0 & \lambda \end{pmatrix} + 1 - D \right] \begin{pmatrix} R \\ G \\ B \end{pmatrix}$$

In this equation, D refers to the degree of chromatic adaptation and lies between 0 (no adaptation) and 1 (complete adaptation). It is calculated thanks to the following equations:

$$D = F \cdot \left[ 1 - \frac{1}{3.6} \cdot e^{\frac{-L_A - 42}{92}} \right]$$

$$\alpha = 1 / R_w$$

$$\beta = 1 / G_w$$

$$\lambda = 1 / B_w$$

Here F is a constant chosen according to the surroundings and $L_A$ corresponds to the luminance of the adapting field.

The subscript w refers to the color of the white point (the original illuminant).

At this point, the six main standard colors (of the original image) and the six modified colors (of the image seen through the sun lens) are known.

Consequently, the processing unit knows the hue H* and the chroma C* of all these colors.

Then, during a tenth step S10, the processing unit compares each main color and the corresponding modified color by analyzing the differences of hue and chroma.

To this end, the processing unit calculates a hue difference $\Delta H^*$ between the hue H* of the main standard color and the hue $H_c^*$ of the modified color for each cluster.

It also calculates a chroma difference $\Delta C^*$ between the chroma C* of the main standard color and the chroma $C_c^*$ of the modified color for each cluster.

Steps S9 and S10 are repeated with at least one other sun lens, so as to determine another hue difference $\Delta H^{*'}$ and another chroma difference $\Delta C^{*'}$ for each standard main color.

In practice, these steps are repeated with a number of other sun lenses (and filters) that is much greater than two.

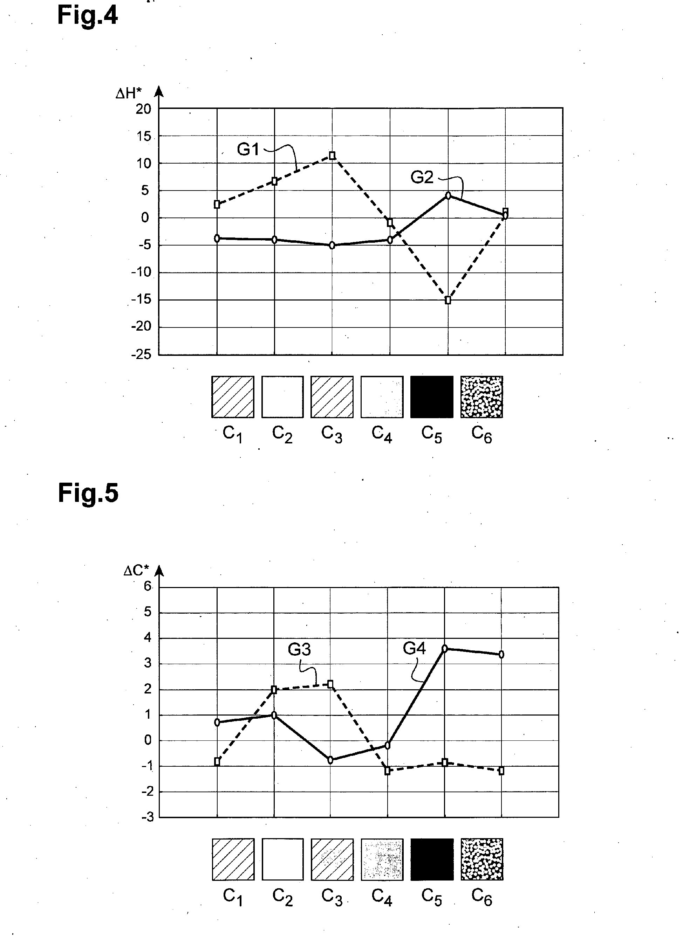

The curves G1, G2 shown in Figure 4 respectively illustrate the hue differences $\Delta H^*$, $\Delta H^{*'}$ calculated for the six main colors and for two distinct sun lenses. The curves G3, G4 shown in Figure 5 illustrate the chroma differences $\Delta C^*$, $\Delta C^{*'}$ calculated for these six main colors and two distinct sun lenses.

Then, during an eleventh step S11, one of the sun lenses is selected.

To this end, the aim can be to find the sun lens that has the weakest impact on the color of the environment (thanks to the hue calculations) and that will have the best impact on the saturation of the scenes viewed through the lens (thanks to the chroma calculations).

Here, we can note that the process of selecting this sun lens can depend on personal criteria of the future wearer. For instance, this selection can take into account the preference of this future wearer according to whether he prefers to see natural colors or colors with saturation. If he is sensible to light, we can also take this information into account. In the following, we will consider he likes viewing colors having high saturation.

Indeed, a great hue shift indicates a great color distortion and a great chroma shift indicates a great saturation.

This step S11 is preferably performed in two sub-steps.

During a first sub-step, a first group of lenses (or a first group of filters) is selected among all the considered sun lenses (or filters).

Here, the selected lenses are those that shift the hues the least or those that do not shift the hues beyond a predetermined threshold.

To this end, we may select the sun lenses for which the hue differences $\Delta H^*$, $\Delta H^{*'}$ calculated for all the main colors are the fewest, and ideally fewer than a predetermined threshold. This threshold may be equal to 10 or more preferably 5 in absolute value. Consequently, in the example of Figure 4, only one of the two sun lenses would be selected (the one corresponding to the curve G2).

In a variant, a K-means analysis could be performed to cluster the lenses according to the hue differences $\Delta H^*$, $\Delta H^{*'}$ calculated for all their main colors. In another variant, the selected sun lenses would be those for which the sum (or the maximal value) of hue differences $\Delta H^*$ for the six colors would be lower than a threshold. This threshold could be predetermined or calculated as a function of all the calculated sums.

Then, the second sub-step consists in choosing, among the group of selected lenses, the one that will give the best visual experience.

To this end, the considered color attribute is the chroma. The chosen sun lens will be for instance the one that increases the chroma the most.

In other words, the chosen sun lens is the one that presents the highest chroma difference $\Delta C^*$ for the highest number of dominant colors (for instance by considering the sum of these differences for the six colors).

In the example of Figure 5, the lens that has the greatest sum of chroma difference is the one corresponding to the curve G4. This lens can consequently be recommended to the future wearer for the considered environment.

In a variant, this lens could be chosen only if the six chroma differences have positive values.

In another variant, the selected lenses may be those for which all the hue and chroma differences respect a mathematical law, that could be:

$$|\Delta E^*|<6 \ \& \ \Delta C^*>0,$$

or

$$|\Delta E^*|<2 \ \& \ \Delta C^*>0.$$

When a lens is selected for one environment, all the process can be repeated for finding other sun lenses adapted to other environments.

The present invention is in no way limited to the embodiment described and shown.

In the main embodiment described above, the lenses are compared the one with the others in order to select only one lens but in a variant, if several lenses have similar filters, they can be combined in cluster of lenses. Consequently, at the end of the process, a cluster of lenses is chosen. Therefore, several lenses could be recommended for a given environment. If too many lenses are recommended, the process can be reproduced with a greater number of clusters.

In the main embodiment described above, one lens is selected among several lenses according to the chosen environment. But in a variant, it is possible to manufacture a lens having the best filter for the considered environment. Such a lens is molded by using a monomer or a polymer in which tints are incorporated. Consequently, the spectral transmission of the chosen tint can be defined as the one that will transmit the more the wavelengths composing the 6 main colors. Several dyes can be selected to obtain this tint. Those dyes, after combination of specific proportions, will induce the spectral transmission of the lens. With a maximizing function, it is possible to select the concentration of each dye to reach the highest transmission of each dominant color. This function can be chosen to additionally match constraints such as the TV range (sunlens class 1, 2 or 3), a minimal transmission for each wavelength band, a maximal transmission for each wavelength band (here, a wavelength band is referring to spectral features that we could select such as short wavelength filtering for retina protection, minimal transmission to respect Qsignal norm for driving, etc).

**Claims**

1. A selecting method implemented by a processing unit that comprises a CPU, a memory and various input and output interfaces, for selecting a light transmission filter for a lens amongst predetermined light transmission filters, depending on an environment in which said lens is to be used, comprising steps of:

- providing at least one image (10) of said environment,
- identifying a predetermined number of main colors ($C_1$ - $C_6$) on said at least one image,
- estimating a first value of at least a color component (H*, C*) for each main color,
- determining, for each main color ($C_1$ - $C_6$), a modified color corresponding to said main color seen through a lens having a first of said predetermined light transmission filters,
- calculating a second value of said color component (H*, C*) for each modified color,
- repeating the determining and calculating steps for each of the other predetermined light transmission filters,
- comparing, for each main color and each predetermined light transmission filter, said first value to each second value, and
- deducing therefrom a selected light transmission filter.

2. The selecting method according to claim 1, wherein:

- the providing step comprises the acquisition of distinct images (10) of said environment, and
- during the identifying step, the main colors are identified on said distinct images (10).

3. The selecting method according to claim 2, wherein:

- before the identifying step, said distinct images (10) are associated into a single final image, and
- during the identifying step, the main colors ($C_1$ - $C_6$) are identified on said final image.

4. The selecting method according to claim 2, wherein, during the identifying step, intermediate main colors are identified on each distinct image (10), and the main colors ($C_1$ - $C_6$) are selected among said intermediate main colors according to the proportion of each intermediate main color on said distinct images (10).

5. The selecting method according to any one of claims 1 to 4, wherein the predetermined number is greater than two and is preferably equal to six.

6. The selecting method according to any one of claims 1 to 5, wherein said step of identifying comprises dividing said image in a predetermined number of groups of areas, each group of areas being defined by a main color that is representative of the colors of said areas.

7. The selecting method according to claim 6, wherein, during said step of identifying, said provided image is divided in groups of areas by using a K-mean process or a process derived from said K-mean process.

8. The selecting method according to claim 7, wherein the provided image (10) is blurred, for instance by means of a low pass Gaussian filter, and said process is performed on the blurred image ($Img_8$).

9. The selecting method according to any one of claims 6 to 8, wherein said step of identifying comprises assigning to each group of areas a main color ($C_1$ - $C_6$) selected into a list of colors, and wherein if two of said groups of areas are assigned to the same main color, said groups of areas are merged.

10. The selecting method according to any one of claims 1 to 9, wherein said color component (H*, C*) is determined according to the CIELAB color space or to a color space deriving from said CIELAB color space.

11. The selecting method according to any one of claims 1 to 10, wherein said color component (H*, C*) is a color hue or a color chroma.

12. The selecting method according to claim 11, wherein said color component (H*) is a color hue and wherein, during the comparison step, a first difference ($\Delta H^*$) between the hue (H*) of the main color ($C_1$ - $C_6$) and the hue of the corresponding modified color is determined for each main color ($C_1$ - $C_6$) and for each predetermined light transmission filter, and during the deducing step, the light transmission filter is selected according to said first differences ($\Delta H^*$).

13. The selecting method according to claim 11, wherein said color component (C*) is a color chroma and wherein, during the comparison step, a second difference ($\Delta C^*$) between the chroma (C*) of the main color ($C_1$ - $C_6$) and the chroma of the corresponding modified color is determined for each main color ($C_1$ - $C_6$) and for each predetermined light transmission filter, and during the deducing step, the light transmission filter is selected according to said second differences ($\Delta C^*$).

14. The selecting method according to claims 12 and 13, wherein, the lens is selected in two sub-steps of:

- choosing, amongst all the predetermined light transmission filters, the one or those for which all the first differences ($\Delta H^*$) are fewer than a predetermined threshold, and
- selecting, among the chosen predetermined light transmission filters, at least one for which the second differences ($\Delta C^*$) are greater than a predetermined threshold, and are preferably the greatest.

15. The selecting method according to any one of claims 1 to 14, wherein the at least one provided image (10) is provided by a future wearer of the lens or is read in a database storing images that are each associated to a given environment.

16. The selecting method according to any one of claims 1 to 15, wherein many images (10) of many distinct environments are provided and wherein a light transmission filter is selected for each environment.


**Patentansprüche**

1. Auswahlverfahren, das von einer Verarbeitungseinheit implementiert wird, die eine CPU, einen Speicher und verschiedene Eingabe- und Ausgabeschnittstellen umfasst, zum Auswählen eines Lichtdurchlassfilters für eine Linse aus vorbestimmten Lichtdurchlassfiltern in Abhängigkeit von einer Umgebung, in der die Linse verwendet werden soll, umfassend folgende Schritte:

   - Bereitstellen mindestens eines Bildes (10) der Umgebung,
   - Identifizieren einer vorbestimmten Anzahl von Hauptfarben ($C_1$ - $C_6$) in dem mindestens einen Bild,
   - Schätzen eines ersten Wertes zumindest einer Farbkomponente (H*, C*) für jede Hauptfarbe,
   - Bestimmen, für jede Hauptfarbe ($C_1$ - $C_6$), einer modifizierten Farbe, die der durch eine Linse mit einem ersten der vorbestimmten Lichtdurchlassfilter gesehenen Hauptfarbe entspricht,
   - Berechnen eines zweiten Wertes der Farbkomponente (H*, C*) für jede modifizierte Farbe,
   - Wiederholen der Schritte des Bestimmens und Berechnens für jedes der anderen vorbestimmten Lichtdurchlassfilter,
   - Vergleichen, für jede Hauptfarbe und jedes vorbestimmte Lichtdurchlassfilter, des ersten Wertes mit jedem zweiten Wert, und
   - Ableiten eines ausgewählten Lichtdurchlassfilters daraus.

2. Auswahlverfahren nach Anspruch 1, wobei:

   - der Schritt des Bereitstellens Erfassen verschiedener Bilder (10) der Umgebung umfasst, und
   - während des Schrittes des Identifizierens die Hauptfarben in den verschiedenen Bildern (10) identifiziert werden.

3. Auswahlverfahren nach Anspruch 2, wobei:

   - vor dem Schritt des Identifizierens die verschiedenen Bilder (10) zu einem einzigen Endbild verbunden werden, und
   - während des Schrittes des Identifizierens die

Hauptfarben ($C_1$ - $C_6$) in dem Endbild identifiziert werden.

4. Auswahlverfahren nach Anspruch 2, wobei während des Schrittes des Identifizierens Zwischenhauptfarben in jedem verschiedenen Bild (10) identifiziert werden und die Hauptfarben ($C_1$ - $C_6$) unter den Zwischenhauptfarben gemäß dem Anteil jeder Zwischenhauptfarbe in den verschiedenen Bildern (10) ausgewählt werden.

5. Auswahlverfahren nach einem der Ansprüche 1 bis 4, wobei die vorbestimmte Anzahl größer als zwei und bevorzugt gleich sechs ist.

6. Auswahlverfahren nach einem der Ansprüche 1 bis 5, wobei der Schritt des Identifizierens Unterteilen des Bildes in eine vorbestimmte Anzahl von Gruppen von Bereichen umfasst, wobei jede Gruppe von Bereichen durch eine Hauptfarbe definiert ist, die für die Farben der Bereiche repräsentativ ist.

7. Auswahlverfahren nach Anspruch 6, wobei während des Schrittes des Identifizierens das bereitgestellte Bild unter Verwendung eines K-Means-Prozesses oder eines aus diesem K-Means-Prozess abgeleiteten Prozesses in Gruppen von Bereichen unterteilt wird.

8. Auswahlverfahren nach Anspruch 7, wobei das bereitgestellte Bild (10) beispielsweise mittels eines Tiefpass-Gaußfilters unscharf gemacht wird und der Prozess an dem unscharfen Bild ($Img_8$) durchgeführt wird.

9. Auswahlverfahren nach einem der Ansprüche 6 bis 8, wobei der Schritt des Identifizierens Zuweisen einer Hauptfarbe ($C_1$ - $C_6$), die in eine Liste von Farben gewählt wurde, zu jeder Gruppe von Bereichen umfasst, und wobei, wenn zwei der Gruppen von Bereichen derselben Hauptfarbe zugewiesen werden, die Gruppen von Bereichen zusammengeführt werden.

10. Auswahlverfahren nach einem der Ansprüche 1 bis 9, wobei die Farbkomponente (H*, C*) gemäß dem CIELAB-Farbraum oder einem aus dem CIELAB-Farbraum abgeleiteten Farbraum bestimmt wird.

11. Auswahlverfahren nach einem der Ansprüche 1 bis 10, wobei die Farbkomponente (H*, C*) ein Farbton oder eine Farbintensität ist.

12. Auswahlverfahren nach Anspruch 11, wobei die Farbkomponente (H*) ein Farbton ist und wobei während des Vergleichsschrittes ein erster Unterschied (ΔH*) zwischen dem Farbton (H*) der Hauptfarbe ($C_1$ - $C_6$) und dem Farbton der entsprechenden modifizierten Farbe für jede Hauptfarbe ($C_1$ - $C_6$) und für jedes vorbestimmte Lichtdurchlassfilter bestimmt wird und während des Schrittes des Ableitens das Lichtdurchlassfilter gemäß den ersten Unterschieden ($\Delta H^*$) ausgewählt wird.

13. Auswahlverfahren nach Anspruch 11, wobei die Farbkomponente ($C^*$) eine Farbintensität ist und wobei während des Vergleichsschrittes ein zweiter Unterschied ($\Delta C^*$) zwischen der Farbintensität ($C^*$) der Hauptfarbe ($C_1$ - $C_6$) und der Farbintensität der entsprechenden modifizierten Farbe für jede Hauptfarbe ($C_1$ - $C_6$) und für jedes vorbestimmte Lichtdurchlassfilter bestimmt wird und während des Schrittes des Ableitens das Lichtdurchlassfilter gemäß den zweiten Unterschieden ($\Delta C^*$) ausgewählt wird.

14. Auswahlverfahren nach den Ansprüchen 12 und 13, wobei die Linse in zwei Teilschritten ausgewählt wird:

    - Auswählen, unter allen vorbestimmten Lichtdurchlassfiltern, desjenigen oder derjenigen, für die alle ersten Unterschiede ($\Delta H^*$) kleiner als ein vorbestimmter Schwellenwert sind, und
    - Auswählen, unter den ausgewählten vorbestimmten Lichtdurchlassfiltern, mindestens eines, für das die zweiten Unterschiede ($\Delta C^*$) größer als ein vorbestimmter Schwellenwert sind und bevorzugt die größten sind.

15. Auswahlverfahren nach einem der Ansprüche 1 bis 14, wobei das mindestens eine bereitgestellte Bild (10) von einem zukünftigen Träger der Linse bereitgestellt wird oder in einer Datenbank gelesen wird, in der Bilder gespeichert sind, die jeweils einer bestimmten Umgebung zugeordnet sind.

16. Auswahlverfahren nach einem der Ansprüche 1 bis 15, wobei viele Bilder (10) vieler verschiedener Umgebungen bereitgestellt werden und wobei für jede Umgebung ein Lichtdurchlassfilter ausgewählt wird.

**Revendications**

1. Procédé de sélection, mis en œuvre par une unité de traitement qui comprend une CPU, une mémoire et diverses interfaces d'entrée et de sortie, permettant la sélection d'un filtre de transmission de lumière pour un verre parmi des filtres de transmission de lumière prédéterminés, en fonction d'un environnement dans lequel ledit verre doit être utilisé, comprenant les étapes suivantes :

    - la fourniture d'au moins une image (10) dudit environnement,

    - l'identification d'un nombre prédéterminé de couleurs principales ($C_1$ - $C_6$) sur ladite au moins une image,
    - l'estimation d'une première valeur d'au moins une composante chromatique ($H^*$, $C^*$) pour chaque couleur principale,
    - la détermination, pour chaque couleur principale ($C_1$ - $C_6$), d'une couleur modifiée correspondant à ladite couleur principale vue à travers un verre doté d'un premier desdits filtres de transmission de lumière prédéterminés,
    - le calcul d'une deuxième valeur de ladite composante chromatique ($H^*$, $C^*$) pour chaque couleur modifiée,
    - la répétition des étapes de détermination et de calcul pour chacun des autres filtres de transmission de lumière prédéterminés,
    - la comparaison, pour chaque couleur principale et chaque filtre de transmission de lumière prédéterminé, de ladite première valeur avec chaque deuxième valeur, et
    - la déduction, sur cette base, d'un filtre de transmission de lumière sélectionné.

2. Procédé de sélection selon la revendication 1, dans lequel :

    - l'étape de fourniture comprend l'acquisition d'images (10) distinctes dudit environnement, et
    - lors de l'étape d'identification, les couleurs principales sont identifiées sur lesdites images (10) distinctes.

3. Procédé de sélection selon la revendication 2, dans lequel :

    - avant l'étape d'identification, lesdites images (10) distinctes sont associées en une image finale unique, et
    - lors de l'étape d'identification, les couleurs principales ($C_1$ - $C_6$) sont identifiées sur ladite image finale.

4. Procédé de sélection selon la revendication 2, dans lequel, lors de l'étape d'identification, des couleurs principales intermédiaires sont identifiées sur chaque image (10) distincte, et les couleurs principales ($C_1$ - $C_6$) sont sélectionnées parmi lesdites couleurs principales intermédiaires selon la proportion de chaque couleur principale intermédiaire sur lesdites images (10) distinctes.

5. Procédé de sélection selon l'une quelconque des revendications 1 à 4, dans lequel le nombre prédéterminé est supérieur à deux et est, de préférence, égal à six.

6. Procédé de sélection selon l'une quelconque des revendications 1 à 5, dans lequel ladite étape d'identification comprend la division de ladite image en un nombre prédéterminé de groupes de zones, chaque groupe de zones étant défini par une couleur principale qui est représentative des couleurs desdites zones.

7. Procédé de sélection selon la revendication 6, dans lequel, lors de ladite étape d'identification, ladite image fournie est divisée en groupes de zones en utilisant la méthode des k-moyennes ou une méthode dérivée de ladite méthode des k-moyennes.

8. Procédé de sélection selon la revendication 7, dans lequel l'image (10) fournie est floutée, par exemple au moyen d'un filtre gaussien passe-bas, et ladite méthode est réalisée sur l'image floutée ($Img_8$).

9. Procédé de sélection selon l'une quelconque des revendications 6 à 8, dans lequel ladite étape d'identification comprend l'affectation, à chaque groupe de zones, d'une couleur principale ($C_1$ - $C_6$) sélectionnée dans une liste de couleurs, et dans lequel, si deux desdits groupes de zones sont affectés à la même couleur principale, lesdits groupes de zones sont fusionnés.

10. Procédé de sélection selon l'une quelconque des revendications 1 à 9, dans lequel ladite composante chromatique (H*, C*) est déterminée selon l'espace colorimétrique CIELAB ou un espace colorimétrique dérivé dudit espace colorimétrique CIELAB.

11. Procédé de sélection selon l'une quelconque des revendications 1 à 10, dans lequel ladite composante chromatique (H*, C*) est une teinte de couleur ou un chroma de couleur.

12. Procédé de sélection selon la revendication 11, dans lequel ladite composante chromatique (H*) est une teinte de couleur et dans lequel, lors de l'étape de comparaison, une première différence ($\Delta H^*$) entre la teinte (H*) de la couleur principale ($C_1$ - $C_6$) et la teinte de la couleur modifiée correspondante est déterminée pour chaque couleur principale ($C_1$ - $C_6$) et pour chaque filtre de transmission de lumière prédéterminé et, lors de l'étape de déduction, le filtre de transmission de lumière est sélectionné selon lesdites premières différences ($\Delta H^*$).

13. Procédé de sélection selon la revendication 11, dans lequel ladite composante chromatique (C*) est un chroma de couleur et dans lequel, lors de l'étape de comparaison, une deuxième différence ($\Delta C^*$) entre le chroma (C*) de la couleur principale ($C_1$ - $C_6$) et le chroma de la couleur modifiée correspondante est déterminée pour chaque couleur principale ($C_1$ - $C_6$) et pour chaque filtre de transmission de lumière prédéterminé et, lors de l'étape de déduction, le filtre de transmission de lumière est sélectionné selon lesdites deuxièmes différences ($\Delta C^*$).

14. Procédé de sélection selon les revendications 12 et 13, dans lequel le verre est sélectionné au moyen des deux sous-étapes suivantes :

- le choix, parmi tous les filtres de transmission de lumière prédéterminés, de celui ou ceux pour lesquels toutes les premières différences ($\Delta H^*$) sont inférieures à un seuil prédéterminé, et
- la sélection, parmi les filtres de transmission de lumière prédéterminés choisis, d'au moins un pour lequel les deuxièmes différences ($\Delta C^*$) sont supérieures à un seuil prédéterminé et sont, de préférence, les plus grandes.

15. Procédé de sélection selon l'une quelconque des revendications 1 à 14, dans lequel l'au moins une image (10) fournie est fournie par un futur porteur du verre ou est lue dans une base de données stockant des images qui sont chacune associées à un environnement donné.

16. Procédé de sélection selon l'une quelconque des revendications 1 à 15, dans lequel de nombreuses images (10) de nombreux environnements distincts sont fournies et dans lequel un filtre de transmission de lumière est sélectionné pour chaque environnement.

# Fig.1

```
        ┌─────────┐
        │   S1    │
        └────┬────┘
             │
        ┌────▼────┐
        │   S2    │
        └────┬────┘
             │
        ┌────▼────┐
        │   S3    │
        └────┬────┘
             │
        ┌────▼────┐
        │   S4    │
        └────┬────┘
             │
        ┌────▼────┐
        │   S5    │
        └────┬────┘
             │
        ┌────▼────┐
        │   S6    │
        └────┬────┘
             │
        ┌────▼────┐
        │   S7    │
        └────┬────┘
             │
          ◇──▼──◇           ┌─────────┐        ┌─────────┐
        ◇   S8    ◇────────▶│   S81   │───────▶│   S82   │
          ◇─────◇           └─────────┘        └────┬────┘
             │                                       │
        ┌────▼────┐                                  │
        │   S9    │◀─────────────────────────────────┘
        └────┬────┘
             │
        ┌────▼────┐
        │  S10    │
        └────┬────┘
             │
        ┌────▼────┐
        │  S11    │
        └─────────┘
```

# Fig.2A

$Img_0$  $Img_{0,5}$  $Img_1$

$Img_2$  $Img_4$  $Img_8$

# Fig.2B

$Img'_0$  $Img'_{0,5}$  $Img'_1$

$Img'_2$  $Img'_4$  $Img'_8$

# Fig.3

**17**

0 10 20 30 40 50 60 70 80 90 100

| Dominant colors |
|---|
| ▨ 82 Vivid Yellow |
| ☐ 226 Very Pale Purple |
| ▨ 84 Strong Yellow |
| ▨ 177 Brilliant Blue |
| ■ 254 Vivid Purplish Red |
| ▨ 236 Vivid Reddish Purple |

| Color presence in % | | | |
|---|---|---|---|
| ★ | 53 | ▼ | 10 |
| ◆ | 15 | ● | 7 |
| ▲ | 14 | ▶ | 5 |

EP 4 258 043 B1

## Fig.4

## Fig.5

# Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019002416 A

### Non-patent literature cited in the description

- **CHENG, D.** ; **PRASAD, D. K** ; **BROWN, M. S.** Illuminant estimation for color constancy: Why spatial-domain methods work and the role of the color distribution. *Journal of the Optical Society of America A*, 2014, vol. 31 (5), 1049, https:/ldoi.org/10.1364/JOSAA.31.001049
- **HORDLEY, S. D**. Scene illuminant estimation: Past, present, and future. *Color Research & Application*, 2006, vol. 31 (4), 303-314, https://doi.org/10.1002/-col.20226

- **AUBAIDAN**. Comparative study of k-means and k-means++ clustering algorithms on crime domain. *Journal of Computer Science*, 2014, vol. 10 (7), 1197-1206, https://doi.org/10.3844/jcssp.2014.1197.1206
- **AIMAN RAZA** ; **SOPHIE JOST** ; **MARIE DUBAIL** ; **DOMINIQUE DUMORTIER**. Automatic colour segmentation and colour palette identification of complex images. *Journal of the International Colour Association*, 2021, vol. 26, 11-21